# EUROPÄISCHE PATENTSCHRIFT

(11) **EP 1 080 515 B1**
(45) Veröffentlichungstag und Bekanntmachung des Hinweises auf die Patenterteilung: **23.05.2007**
(21) Anmeldenummer: 00925044.0
(22) Anmeldetag: 10.03.2000
(51) Int. Cl.: H01R 4/64, H02B 1/16, E05C 9/04

(54) **STANGENVERSCHLUSS MIT ERDUNGSEINRICHTUNG**
BAR LOCK WITH EARTHING DEVICE
SYSTEME DE FERMETURE A BARRES MUNI D'UN DISPOSITIF DE MISE A LA TERRE

(30) Priorität: 16.03.1999 DE 29904771 U
(43) Veröffentlichungstag der Anmeldung: 07.03.2001
(73) Patentinhaber: EMKA BESCHLAGTEILE GmbH & Co. KG, D-42551 Velbert (DE)
(72) Erfinder: SAUERLAND, Manfred, D-45144 Essen (DE); HOFFMANN, Rainer, D-40764 Langenfeld (DE)
(74) Vertreter: Müller, Karl-Ernst
(86) Internationale Anmeldenummer: PCT/DE2000/000801
(87) Internationale Veröffentlichungsnummer: WO 2000/055945

(56) Entgegenhaltungen:
- EP-A- 0 025 472
- EP-A- 0 512 361
- DE-U- 9 016 696

## Beschreibung

Die Erfindung betrifft einen Stangenverschluß insbesondere für Schaltschranktüren oder dergleichen, mit einem an der Tür befestigbaren metallischen oder elektrisch leitenden Schloßkasten und wenigstens einer darin unter der Wirkung eines von einer Betätigung drehbaren Ritzels längsverschiebbar angeordneten Schloßstange, wobei der Schloßkasten bei seiner Montage an der Tür über eine Erdungseinrichtung in leitenden Kontakt mit der Tür gebracht wird.

Ein Stangenverschluß mit den vorgenannten Merkmalen ist in dem DE GM 90 16 696 beschrieben; soweit in der Regel die Türen eines Schaltschrankes mit einer Lackschicht versehen sind, ist als Erdungsmaßnahme bei dem bekannten Stangenverschluß an dem Schloßkasten eine Erdungsfederscheibe vorgesehen, die bei der Montage des Schloßkastens an der Tür zwischen dem Schloßkasten und der Tür zu liegen und unter Klemmwirkung durch Befestigungsmittel durch Muttern oder Schrauben kommt, und einen in Richtung auf die Tür vorgebogenen Vorsprung aufweist, der beim Festziehen des Befestigungsmittels in eine Strecklage gelangt und dabei mit an ihm angeordneten Spitzen oder Kanten die Lackschicht wegschabt, so daß sich eine leitende Verbindung zwischen der Erdungsfederscheibe, damit zwischen dem Schloßkasten und der Metallfläche der Tür einstellt.

Mit der bekannten Erdungsmaßnahme für den Schloßkasten ist der Nachteil verbunden, daß es sich bei der vorgesehenen Erdungsfederscheibe um einen kleines, zusätzliches Bauteil handelt, welches bei der Montage des Stangenverschlusses schwierig zu handhaben ist. Als weiterer Nachteil ist zu nennen, daß die Herstellung der leitenden Verbindung allein von der Befestigung des Schloßkastens an der Tür abhängig ist, weil nur durch das Anziehen der Befestigungsmittel die notwendige Kratzspur hergestellt wird. Diese Erdungsverbindung ist demnach nicht immer ausreichend sicher. Es kommt hinzu, daß die Kratzspur während der Lebensdauer des Schaltschrankes korrodieren kann, so daß die Erdungsmaßnahme unwirksam werden kann.

Der Erfindung liegt daher die Aufgabe zugrunde, die Montage eines Stangenverschlusses mit einer Erdungseinrichtung zu vereinfachen und die Wirksamkeit der Erdungseinrichtung insgesamt zu verbessern.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß eine zwischen Schloßkasten und Tür angeordnete und im Klemmsitz gehaltene Erdungsplatte mit einem über die Kontur des Schloßkastens hervorstehenden Ansatz zur Aufnahme einer die leitende Verbindung mit der Tür herstellenden Schraube mit Schabwirkung vorgesehen ist, und daß die Erdungsplatte wenigstens zwei geringfügige Materialerhöhurigen als Auflagerfläche für den Schloßkasten aufweist. Mit der Erfindung ist der Vorteil verbunden, daß bei der Montage des Stangenverschlusses die zwischen dem Schloßkasten und der Tür anzuordnende Erdungsplatte einfach zu handhaben ist. Soweit durch den an der Erdungsplatte befindlichen Ansatz eine Schraube senkrecht zur Türebene hineinzudrehen ist, ist auch die über die Schraube aufzubringende Kratzwirkung einfacher auszuüben und sicherer durchzuführen. Soweit an der Erdungsplatte zusätzlich Materialerhöhungen als Auflager für den Schloßkasten vorgesehen sind, ergibt sich daraus eine erhöhte Flächenpressung zwischen dem Schloßkasten und den Materialerhöhungen der Erdungsplatte, so daß an den Auflagerstellen eine Korrosion und damit eine Unterbrechung der Erdungswirkung vermieden ist.

Nach einem Ausführungsbeispiel der Erfindung ist vorgesehen, daß Schloßkasten und Erdungsplatte über Formschlußgestaltungen aneinander orientiert sind, wodurch die Montage weiter erleichtert ist.

In zweckmäßiger Form kann nach einem Ausführungsbeispiel der Erfindung die die Erdung herstellende und in die Erdungsplatte einschraubbare Schraube als eine Schraube mit Schneidkerb ausgebildet sein.

Ein weiterer Aspekt der Erfindung besteht darin, nicht nur den Schloßkasten zu erden, sondern auch dafür Sorge zu tragen, daß die in dem Schloßkasten laufende, wenigstens eine Schloßstange oder bei üblicher Ausführung eines Stangenverschlusses beide in dem Schloßkasten laufenden Schloßstangen geerdet sind, weil aufgrund der Antriebsmechanik der perforierten Schloßstangen über das in dem Schloßkasten gelagerte Ritzel keine exakte Kontaktierung von der Tür über den Schloßkasten bis zur Schloßstange bzw. der daran noch angehängten Verriegelungsstange sichergestellt ist. Daher sieht die Erfindung zusätzlich vor, daß zur Erdung der wenigstens einen Schloßstange in dem Schloßkasten ein Schleifkontakt vorgesehen ist.

Nach einem ersten Ausführungsbeispiel dieses Erfindungsaspektes kann vorgesehen sein, daß zwischen die Schloßkastenteile ein Federblech mit gegen die Schloßstange anliegenden Federvorsprüngen eingelegt ist, wobei das Federblech in seiner zu den Schloßkastenteilen parallelen Erstreckung eine sich beim Einspannen zwischen die Schloßkastenteile streckende Wölbung aufweist.

In einer alternativen Ausführungsform der Erdung der Schloßstangen kann vorgesehen sein, daß zwischen einer Wand des Führungskanals und der Schloßstange eine an dem Schloßkasten festgelegte, vorgespannte und durch ihre Vorspannung in Anlage an der Schloßstange gehaltene Flachbandfeder angeordnet ist.

Eine weitere Möglichkeit besteht darin, daß zwischen der Erdungsplatte und dem Schloßkasten eine in Richtung auf den Schloßkasten vorgespannte Erdungsfeder eingespannt ist, die mit einem Federarm durch einen in dem Schloßkasten ausgebildeten Durchbruch hindurchgreift und federnd in Anlage an der im Schloßkasten laufenden Schloßstange gehalten ist, wobei nach einer Ausführungsform der Erfindung die Erdungsfeder an die der Erdung der Erdungsplatte dienende Schraube angeschlossen sein kann.

In der Zeichnung ist ein Ausführungsbeispiel der Erfindung wiedergegeben, welches nachstehend beschrieben ist. Es zeigen:
- Fig. 1: einen Schloßkasten mit Erdungsplatte in einer Perspektivansicht,
- Fig. 2: die Erdungsplatte gemäß Fig. 1 in einer Einzeldarstellung
- Fig. 3: ein Schloßkastenteil mit darin geführter Schloßstange und Schleifkontakt in Seitenansicht,
- Fig. 3a: die Flachbandfeder gemäß Fig. 3 in einer Einzeldarstellung
- Fig. 4: ein Schloßkastenteil mit zwei darin geführten Schloßstangen und Schloßstangenerdung in einer Draufsicht,
- Fig. 4a: das Federblech gemäß Fig. 4 in Seitenansicht,
- Fig. 5: einen Schloßkasten mit Erdungsplatte und Schloßstangenerdung in Seitenansicht.
- Fig. 5a: die Erdungsfeder gemäß Fig. 5 in Draufsicht

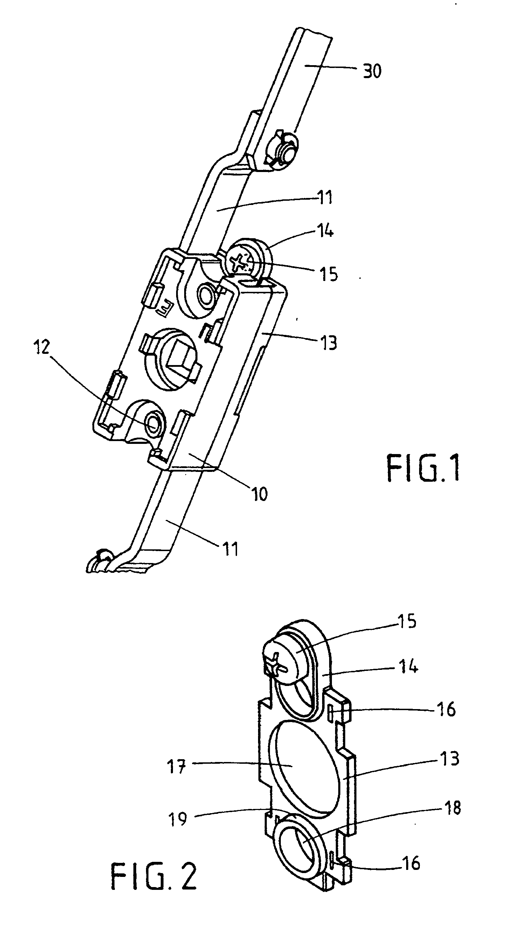

In dem in Fig. 1 dargestellten Schloßkasten 10 sind zwei kurze Schloßstangen 11 längsverschiebbar geführt, wobei an die Schloßstangen 11 zusätzliche Verriegelungsstangen 30 angehängt sind. Der Schloßkasten 10 ist über in Schraublöcher 12 einschraubbare, nicht dargestellte Befestigungsmittel an einem ebenfalls nicht dargestellten Türblatt zu montieren. Zwischen dem Schloßkasten 10 und dem nicht dargestellten Türblatt wird eine Erdungsplatte 13 derart angeordnet, daß die Erdungsplatte 13 bei montiertem Stangenverschluß zwischen dem Schloßkasten 10 und dem Türblatt zu liegen kommt. Die Erdungsplatte 13 weist einen über die Kontur des Schloßkastens herausragenden Ansatz 14 auf, in welchen eine Schraube 15 mit Schabwirkung eingeschraubt ist, die in montiertem Zustand über das Wegkratzen der Lackierung die leitende Verbindung zwischen dem metallischen Türblatt und dem Schloßkasten herstellt.

Wie Fig. 2 deutlicher zu entnehmen ist, weist das Erdungsblech 13 eine zentrale Öffnung 17 zum Durchtritt des Betätigungsdorn eines nicht dargestellten, zum Stangenverschluß gehörigen Betätigungsmittels auf, ebenso Schraublöcher 18, die bei der Montage in eine fluchtende Lage mit den Schraublöchern 12 des Schloßkastens 10 gebracht werden. Zur Erleichterung der Montage sind die Schraublöcher 18 der Erdungsplatte 13 mit einem Kragen 19 versehen, der in die Schraublöcher 12 des Schloßkastens 10 eingreift und so eine formschlüssige Orientierung zwischen Schloßkasten 10 und Erdungsplatte 13 herstellt.

In den vier Eckbereichen weist die Erdungsplatte 13 jeweils leicht über ihre Ebene hervorstehende Materialerhöhungen 16 auf, die als Auflager für den Schloßkasten 10 dienen, so daß bei montiertem Schloßkasten der Schloßkasten 10 mit einer vergleichsweise hohen Flächenpressung auf den Materialerhöhungen 16 der Erdungsplatte 13 auflagert, so daß in diesem Bereich Korosion vermieden ist.

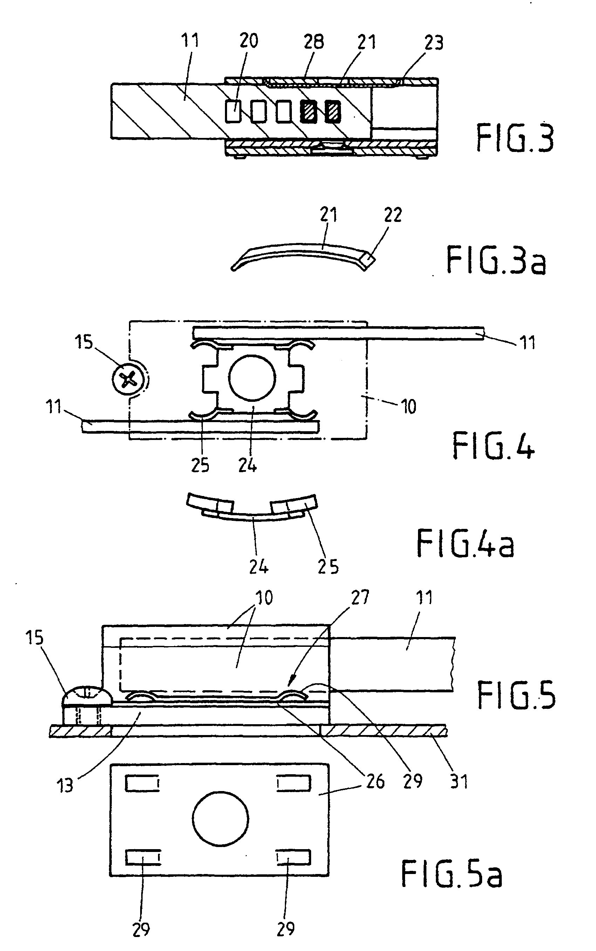

In Fig. 3 ist ein erstes Ausführungsbeispiel der zusätzlich vorgesehenen Erdungsmaßnahme für die wenigstens eine Schloßstange 11 dargestellt, wobei in einer Wand 28 des Führungskanals für die Schloßstange, hier dem Deckel, eine Flachbandfeder 21 angeordnet ist, die mit ihren Enden 22 in Öffnungen 23 in der Wand 28 des Schloßkastens 10 eingehakt und festgelegt ist. Wie sich aus Fig. 3a im einzelnen entnehmen läßt, ist die Flachbandfeder 21 in Richtung auf das Innere des Schloßkastens 10 vorgebogen, so daß sie Kraft ihrer Federspannung in Anlage an der Stirnseite der in dem Schloßkasten 10 laufenden Schloßstange 11 gehalten ist. Damit ist eine sichere Erdungsverbindung von der Verriegelungsstange 30 über die Schloßstange 11 und den Schloßkasten 10 sowie die Erdungsplatte 13 zum Türblatt gegeben.

Eine alternative Ausführungsform ergibt sich aus den Fig. 4, 4a, in welchen ein Schloßkasten 10 mit zwei darin laufenden Schloßstangen 11 dargestellt ist. Zwischen die beiden den Schloßkasten 10 ausbildenden Schloßkastenteile ist ein Federblech 24 eingelegt und zwischen den Schloßkastenteilen eingespannt, welches mit seitlich in die Führungsbahn für die beiden Schloßstangen 11 hineinragenden und aufgrund der Federvorspannung des Federbleches 24 in Anlage an den Schloßstangen gehaltenen Federvorsprtingen 25 versehen ist. Aufgrund der Vorwölbung des Federbleches gelangt dieses bei dem Zusammenfügen der beiden Schloßkastenteile in eine Strecklage, so daß die federnde Anlage der Federvorsprünge 25 an den Schloßstangen einerseits, wie aber auch eine dauerhafte Anlage des Federbleches 24 an den leitenden Teilen des Schloßkastens 10 gewährleistet ist.

Eine weitere Ausführungsform einer Erdungsmaßnahme für die Schloßstangen ist Fig. 5, 5a zu entnehmen, bei welcher zwischen der Erdungsplatte 13 und dem Schloßkasten 10 eine Erdungsfeder 26 angeordnet ist, die mit einem abstehenden Federarm 29 durch wenigstens einen im Boden des auf der Erdungsplatte 13 auflagernden Schloßkastens 10 angeordneten Durchbruch 27 in den Führungskanal für die zugeordnete Schloßstange 11 hineinreicht und dort aufgrund ihrer federnden Ausgestaltung in Anlage an der Schloßstange 11 verbleibt. Soweit zwei Schloßstangen vorgesehen sind, kann die Erdungsfeder 26 auch flächig entsprechend der Ausbildung der Erdungsplatte 13 ausgebildet sein und mit zwei oder mit spiegelbildlich angeordneten vier Federarmen 29 in den Schloßkasten 10 eingreifen. Wie nicht weiter dargestellt, kann die Erdungsfeder 26 auch mit einem zusätzlichen Ansatz an die Schraube 15 angeschlossen sein.

## Patentansprüche

1. Stangenverschluß, insbesondere für Schaltschranktüren oder dergleichen, mit einem an der Tür befestigbaren metallischen oder elektrisch leitenden Schloßkasten (10) und wenigstens einer darin unter der Wirkung eines von einer Betätigung drehbaren Ritzels längsverschiebbar angeordneten Schloßstange (11), wobei der Schloßkasten (10) bei seiner Montage an der Tür über eine Erdungseinrichtung in leitenden Kontakt mit der Tür gebracht wird, **dadurch gekennzeichnet, daß** eine zwischen Schloßkasten (10) und Tür angeordnete und im Klemmsitz gehaltene Erdungsplatte (13) mit einem über die Kontur des Schloßkastens (10) hervorstehenden Ansatz (14) zur Aufnahme einer die leitende Verbindung mit der Tür herstellenden Schraube (15) mit Schabwirkung vorgesehen ist, und daß die Erdungsplatte (13) wenigstens zwei geringfügige Materialerhöhungen (16) als Auflagerfläche für den Schloßkasten (10) aufweist.

2. Stangenverschluß nach Anspruch 1, **dadurch gekennzeichnet, daß** Schloßkasten (10) und Erdungsplatte (13) über Formschlußgestaltungen (12, 19) aneinander orientiert sind.

3. Stangenverschluß nach Anspruch 1 oder 2, **dadurch gekennzeichnet, daß** eine Schraube (15) mit Schneidkerb in den Ansatz (14) der Erdungsplatte (13) einschraubbar ist.

4. Stangenverschluß nach einem der Ansprüche 1 bis 3, **dadurch gekennzeichnet, daß** zur Erdung der wenigstens einen Schloßstange (11) in dem Schloßkasten (10) ein Schleifkontakt (21, 24, 26) vorgesehen ist.

5. Stangenverschluß nach Anspruch 4 mit einem aus zwei Teilen bestehenden Schloßkasten, **dadurch gekennzeichnet, daß** zwischen die Schloßkastenteile ein Federblech (24) mit gegen die Schloßstange (11) anliegenden Federvorsprüngen (25) eingelegt ist.

6. Stangenverschluß nach Anspruch 5, **dadurch gekennzeichnet, daß** das Federblech (24) in seiner zu den Schloßkastenteilen parallelen Erstreckung eine sich beim Einspannen zwischen die Schloßkastenteile streckende Wölbung aufweist.

7. Stangenverschluß nach Anspruch 4 mit wenigstens einem im Schloßkasten ausgebildeten Führungskanal zur Aufnahme der Schloßstange, **dadurch gekennzeichnet, daß** zwischen einer Wand (28) des Führungskanals und der Schloßstange (11) eine an dem Schloßkasten (10) festgelegte, vorgespannte und durch ihre Vorspannung in Anlage an der Schloßstange (11) gehaltene Flachbandfeder (21) angeordnet ist.

8. Stangenverschluß nach Anspruch 4, **dadurch gekennzeichnet, daß** zwischen der Erdungsplatte (13) und dem Schloßkasten (10) eine in Richtung auf den Schloßkasten (10) vorgespannte Erdungsfeder (26) eingespannt ist, die mit einem Federarm (29) durch einen in dem Schloßkasten (10) ausgebildeten Durchbruch (27) hindurchgreift und federnd an der im Schloßkasten (10) laufenden Schloßstange (11) anliegt.

9. Stangenverschluß nach Anspruch 8, **dadurch gekennzeichnet, daß** die Erdungsfeder (26) an die der Erdung der Erdungsplatte (13) dienende Schraube (15) angeschlossen ist.

## Claims

1. Bar lock, in particular for doors of switch cabinets or the like, with a metal or electroconductive case (10) that can be secured to the door, and with at least one bar (11) that can be longitudinally displaced therein by the effect of a pinion that can be rotated by actuation, whereby said case (10) when mounted on said door is brought into conductive contact with said door via a grounding device, **characterized in that** a grounding plate (13) is arranged between the case (10) and the door and is held in a clamp seat, and has a projection (14) that projects beyond the contour of said case (10) for receiving a screw (15) that produces the conductive connection to said door by scraping, and **in that** said grounding plate (13) has at least two slight material elevations (16) as support surfaces for said case (10).

2. Bar lock according to claim 1, **characterized in that** case (10) and grounding plate (13) are mutually oriented via positive fit elements (12,19).

3. Bar lock according to claim 1 or 2, **characterized in that** a screw (15) having a cutting notch can be screwed into said member (14) of said grounding plate (13).

4. Bar lock according to one of Claims 1 through 3, **characterized in that** a sliding contact (21, 24, 26) is provided in said case (10) for grounding said at least one bar (11).

5. Bar lock according to claim 4, with a case comprising two parts, **characterized in that** interposed between said parts of said case is a sheet metal spring (24) with resilient projections (25) adjacent to said bar (11).

6. Bar lock according to Claim 5, **characterized in that** said sheet metal spring (24) when extended parallel to said parts of said case when inserted has a curvature that extends between said parts of the case.

7. Bar lock according to Claim 4, with at least one guide channel formed in said case for receiving said bar, **characterized in that** arranged between one wall (28) of said guide channel and said bar (11) is a flat band spring (21) that is fixed to said case (10), biased, and held adjacent to the bar (11) by its bias.

8. Bar lock according to claim 4, **characterized in that** loaded between said grounding plate (13) and said case (10) is a grounding spring (26) that is biased in the direction of said case (10), one spring arm (29) thereof passing through a through-hole (27) in said case (10) and resting spring-like against said bar (11) running in said case (10).

9. Bar lock according to Claim 8, **characterized in that** said grounding spring (26) is attached to said screw (15) that provides the ground for said grounding plate (13).

## Revendications

1. Fermeture à crémone, en particulier pour des portes d'armoire de commande ou similaires, comportant un palâtre (10) métallique ou électroconducteur à fixer contre la porte, et au moins une crémone (11), montée dans celui-ci et mobile dans le sens longitudinal par l'action d'un pignon pouvant être entraîné en rotation par un actionnement, le palâtre (10), au moment de son montage contre la porte, étant amené en contact conducteur avec la porte par l'intermédiaire d'un dispositif de mise à la terre, **caractérisée en ce qu'**il est prévu une plaque de mise à la terre (13), qui est montée entre le palâtre (10) et la porte et est maintenue par un ajustement serré et qui est munie d'une saillie (14), s'avançant au-dessus du contour du palâtre (10) et destinée à recevoir une vis (15) avec action de raclage et établissant la liaison conductrice avec la porte, et **en ce que** la plaque de mise à la terre (13) comporte au moins deux très petites surélévations de matière (16) formant une surface d'appui pour le palâtre (10).

2. Fermeture à crémone selon la revendication 1, **caractérisée en ce que** le palâtre (10) et la plaque de mise à la terre (13) sont orientées l'une contre l'autre par l'intermédiaire de structures emboîtables (12, 19).

3. Fermeture à crémone selon la revendication 1 ou 2, **caractérisée en ce qu'**une vis (15) avec une encoche coupante est destinée à être vissée dans la saillie (14) de la plaque de mise à la terre (13).

4. Fermeture à crémone selon l'une quelconque des revendications 1 à 3, **caractérisée en ce que**, pour la mise à la terre de ladite au moins une crémone (11), il est prévu un contact de frottement (21, 24, 26) dans le palâtre (10).

5. Fermeture à crémone selon la revendication 4, comportant un palâtre réalisé en deux parties, **caractérisée en ce qu'**une plaque flexible (24), munie de saillies flexibles (25) en appui contre la crémone (11), est insérée entre les parties du palâtre.

6. Fermeture à crémone selon la revendication 5, **caractérisée en ce que** la plaque flexible (24), dans son extension parallèle aux parties du palâtre, comporte une courbure qui s'étend entre les parties du palâtre lors de sa mise en place.

7. Fermeture à crémone selon la revendication 4, comportant au moins un conduit de guidage, réalisé dans le palâtre et destiné à recevoir la crémone, **caractérisée en ce qu'**entre une paroi (28) du conduit de guidage et la crémone (11) est disposé un ressort à lame plate (21) qui est fixé contre le palâtre (10), est précontraint et, sous l'effet de sa précontrainte, est maintenu en appui contre la crémone (11).

8. Fermeture à crémone selon la revendication 4, **caractérisée en ce qu'**entre la plaque de mise à la terre (13) et le palâtre (10) est serré un ressort de mise à la terre (26), qui est précontraint vers le palâtre (10) et qui, avec un bras (29), s'engage à travers un passage (27) ménagé dans le palâtre (10) et est en appui flexible contre la crémone (11) passant dans le palâtre (10).

9. Fermeture à crémone selon la revendication 8, **caractérisée en ce que** le ressort de mise à la terre (26) est assemblé à la vis (15) destinée à relier à la terre la plaque de mise à la terre (13).
